Europäisches Patentamt

European Patent Office

Office européen des brevets

(11) Publication number: 0 328 798
A1

# EUROPEAN PATENT APPLICATION

(21) Application number: 88203023.2

(51) Int. Cl.⁴: B07C 5/36

(22) Date of filing: 28.12.88

(30) Priority: 15.01.88 NL 8800085

(43) Date of publication of application:
23.08.89 Bulletin 89/34

(84) Designated Contracting States:
AT BE CH DE ES FR GB GR IT LI LU NL SE

(71) Applicant: Speciaal-Machinefabriek J.H. van
Uitert B.V.
Industriestraat 14-16
NL-5107 NC Dongen(NL)

(72) Inventor: Van Uitert, Johannes Hendrikus
Vaartweg 33
NL-5109 RB 's-Gravenmoer(NL)

(74) Representative: Lips, Hendrik Jan George, Ir.
et al
HAAGSCH OCTROOIBUREAU Breitnerlaan
146
NL-2596 HG Den Haag(NL)

(54) Device for selectively distributing objects, especially bottles, supplied in a row by means of a supply conveyor.

(57) Device for selectively distributing objects, especially bottles, supplied in a row (4) by means of a supply conveyor (1), over a plurality of output conveyors (2) located besides the supply conveyor (1), said device comprising a sorting conveyor (9) provided with pushing members (13) movable in a direction perpendicular to the axis of the sorting conveyor (9), each pushing member (13) being provided with a follower (15) cooperating with stationary cam tracks (16,19-27), controlling means (27-38) being present to bring the follower (15) of a pushing member (13) in a predetermined cam track (16,19-26) in dependence on a signal delivered by a bottle watching station (7).

FIG. 1

**Device for selectively distributing objects, especially bottles, supplied in a row by means of a supply conveyor.**

The invention relates to a device for selectively distributing objects, especially bottles, supplied in a row by means of a supply conveyor, over a plurality of output conveyors located besides the supply conveyor for feeding predetermined bottles to predetermined treatment stations, said device comprising a sorting conveyor mounted beside said endless supply conveyor opposite the side where the output conveyors are located, said sorting conveyor being coupled to the supply conveyor and being provided with juxtapositioned pushing members which are movable in a direction perpendicular to the direction of movement of the sorting conveyor, such that they can be brought into contact with the bottles standing on the supply conveyor, each pushing member being provided with a follower cooperating with stationary cam tracks of which the first one substantially extends in the direction of the sorting conveyor and at least one other track obliquely diverges from said first cam track in the direction of the supply conveyor to return, after attaining the most remote point, back to the first cam track, controlling means being present to bring the follower of a pushing member in a predetermined cam track in dependence on a signal delivered by a bottle watching station positioned near the supply conveyor in upstream direction of this.

Such a device is known by DE-A-2,941,576. In case of this known device the follower of a pushing member can be brought in the cam track which obliquely diverge from said first cam track by electromagnetical means controlled by a signal delivered by the bottle watching station. By said watching station no signal will be delivered if a bottle is missing in the row of bottles or perhaps only a piece of a broken bottle is present. If the latter is the case this broken bottle will remain on the supply conveyor and will have to be transported through the complete device, which can comprise more sets of cam tracks.

If a bottle is missing in the row of bottles the danger exists that a bottle adjacent the open place is rotated when it is contacted by the pushing member. This brings with it that such a bottle will not be moved away from the supply conveyor at all.

Now the invention aims to remove these disadvantages and to that end a device of the above described type is characterized in that at some distance upstream the point where the oblique cam track is branched off from the first cam track, this first cam track is provided with a curved portion by which the pushing members are moved over some distance in the direction towards the supply conveyor, such that the pushing members automatically will follow the cam track diverging from the first cam track in case the bottle watching station does not deliver a signal to control the pushing member.

In this way it is obtained that when no bottle has been detected by the bottle watching station or a bottle which does not fulfil the requirements set, the related pushing members will automatically follow the obliquely diverging cam track and e.g. will come in the interspace between two adjacent bottles, so that these bottles will be positively supported. In a corresponding way a bottle not fulfilling the requirements, by reason of which no signal is delivered to the pushing members, will be directly removed from the supply conveyor. Consequently such a bottle needs not to be handled by the further part of the device.

According to a further embodiment the pushing members are having such a width that each bottle will be in contact with at least two of these members, each pushing member being provided with an upwardly extending tongues the tongues of a certain number of adjacent pushing members being staggered with respect to each other, the control means comprising an equal number of strips shiftably mounted to at least one bar which is stationary mounted in a direction tranverse to the direction of movement of the conveyor, each strip extending over said number of pushing members.

In this way it is attained that each pushing member, the follower of which is moved along the curved part of the first cam track and so is moved in the direction of the supply conveyor, can be gradually moved back if the bottle watching station is given a signal to this purpose. To this end the related strip cooperates with the pushing member over that distance which the pushing member moves from the point where it has been shifted outwardly by the curved portion until the point where it can leave said curved portion.

The width of the pushing members can be considerably reduced by having the tongues of successive pushing members staggered and by having the control strip extending over a predetermined distance so that it is not necessary that each pushing member is subdued to a sudden shift at a predetermined location to bring the follower of a pushing member in the desired cam track. So the transverse movement of the bottles, if necessary, will take place in a much more gradual way.

Preferably it will be provided that each strip extends over at least the distance travelled by each pushing member between the beginning and the end of the curved portion of the first cam track.

If now a pushing member beings to move outwardly at the beginning of a cam track, it will automatically push away the control strip with its tongue, if this should be necessary. Consequently it is not possible that a tongue connected to a pushing member will engage the control strip in a wrong way. Especially it may be provided that each strip is moved by means of a pivotally mounted lever actuated by a pneumatic cylinder, the supply of pressurized air to the cylinder being controlled by a signal delivered by the bottle watching station.

Especially by the signal delivered by the bottle watching station a valve will be controlled which during a predetermined time period causes pressurized air to be supplied to the concerned pneumatic cylinder.

After this in a way known per se the pressure can be released and the piston rod of the cylinder can be returned to its starting position for instance by means of a spring.

Further it is considered to safeguard the device against damage, for instance when the pressurized air supply shuts down when a pushing member is moved from the one into the other position and consequently does not reach the desired position.

This is attained in that the tongue of each pushing member, immediately after said pushing member has past the curved portion of the first cam track, will be positioned besides a checking bar being pivotally suspended in such a way that a tongue of a pushing member not being in one of both final positions will engage the checking bar and will displace this, by which displacement a switch will be actuated for switching off the device. In this way it is also attained, that a pushing member, being brought in a predetermined position, will not change its position anymore and has to follow either the first straight on going cam track or the cam track obliquely diverging therefrom.

According to a further embodiment a stationary guide being mounted above the output conveyors and obliquely diverging from the supply conveyor to bring a bottle being pushed away from the supply conveyor by the pushing members on the desired output conveyor, the most forward portion of the stationary guide is pivotally mounted such that when on this portion a load is exerted trespassing a predetermined value, this portion will be displaced, by which displacement a switch will be actuated for switching off the device.

If now for instance a bottle should have been displaced outwardly over a certain distance, away from the supply conveyor, and should engage the forward edge of the guide so that it should block a pushing member following said bottle and being shifted outwardly over a certain distance, the bottle will be pressed against the pivotally mounted forward portion of the guide so that the device will be switched off.

It can be remarked that US-A-3,791,518 is showing a device comprising stationary guides so that bottles, moved from the supply conveyor, are transferred to succeeding other conveyors.

The invention is now explained by means of an embodiment, shown in the drawing, in which:

Fig. 1 schematically shows a plan view of part of a device according the invention;

Fig. 2 schematically shows partial a cross section and a view over the line II-II of Fig. 1;

Fig. 3 schematically shows a side view of a safeguarding device guaranteeing the right position of a pushing member; and

Fig. 4 schematically shows a plan view of the safeguarding device of Fig. 3.

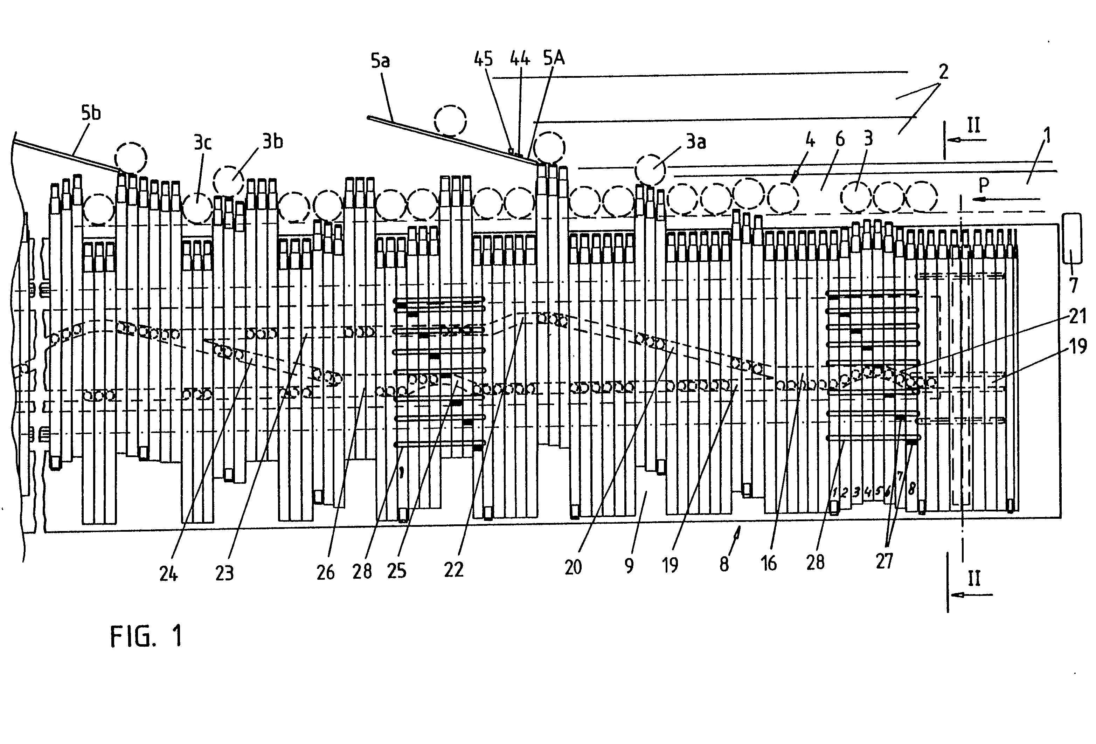

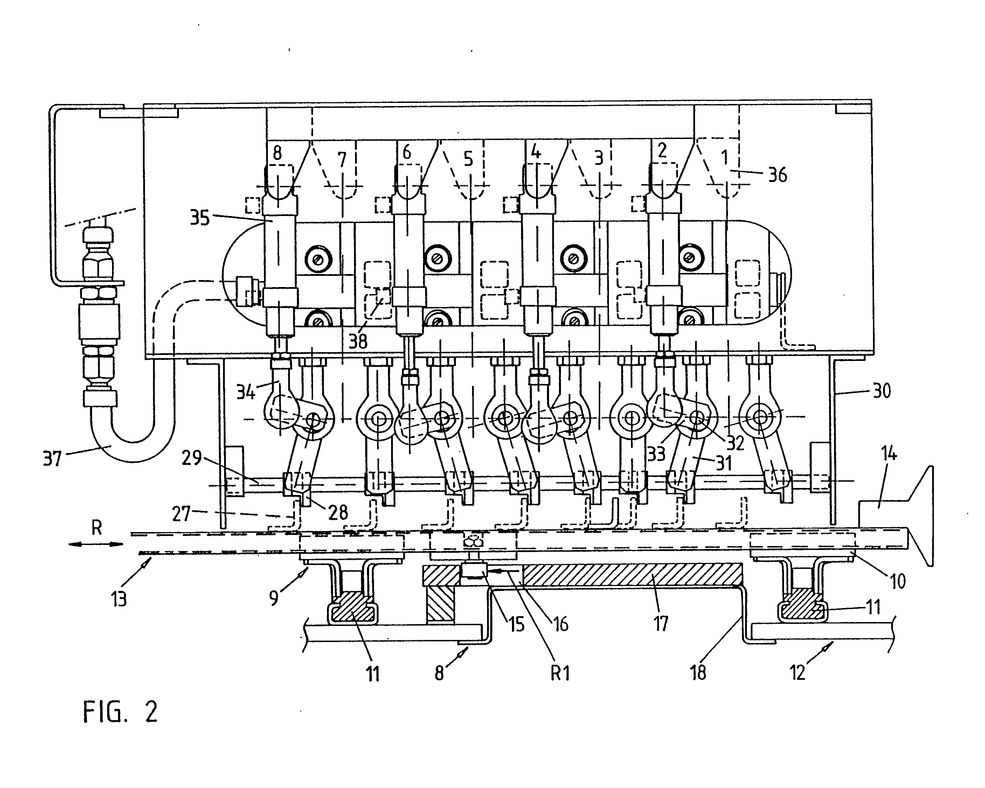

The device shown in Figs. 1 and 2 comprises the supply conveyor 1 and the output conveyors 2 lying beside it. By means of the supply conveyor 1 bottles 3 are supplied in a single row 4 in the direction of the arrow P. The bottles 3a are the first to be expelled and to be moved along the stationary guide 5a to be fed to a predetermined handling station 5a. Of the bottles 3 moving further on the bottles 3a are removed from the supply conveyor 1 to be fed to another station by means of the guide 5b, whereas the bottles 3c move further on with the conveyor 1. It is not necessary that the bottles 3a, b and so on succeed each other but the succession may be arbitrary. Also it is possible that bottles lack in the row as at the location of reference number 6.

The bottles can be identified by a bottle watching station 7 which is located near the supply conveyor at the beginning of the sorting device 8. The sorting device 8 contains an endless chain 9 which in a way not further indicated is coupled to the supply conveyor 1, so that it is moved synchronously therewith.

As appears from Fig. 2 the chain 9 has links 10 which at two spaced locations are supported by supports 11 being fixedly connected to the frame 12 of the device 8. In each link a pushing member 13 is shiftably mounted, such that it can be displaced in the direction of the double arrow R. The end of each pushing member 13 directed towards the supply conveyor 1 and consequently towards the bottles 3 supports a pushing element 14, which can engage the bottles to distribute the force exerted by the pushing member over a sufficiently large surface of the bottle.

Each pushing member 13 is provided with a follow roll 15 which according to Fig. 2 is located in a cam track 16 applied in a cam plate 17 which is supported by the frame part 18.

The cam track 16 has a width which is more than twice the diameter of the follow roll 15 so that, as appears especially from Fig. 1, the follow roll will follow the part 19 of the cam track joining the part 16, or the part 20 obliquely diverging from it. The upstream part 19 of the cam track joins the part 16 with a curved portion 21. The obliquely diverging part 20 of the cam track joins a straight on running part 23 by means of a somewhat retrograding part 22 and ends in a succeeding obliquely running cam track part 24. This cam track part 24 is branched off from the straight part 19 under interposition of a curved part 25 and a broadened part 26, which parts correspond to the parts 21 and 16 respectively. The number of obliquely diverging cam tracks 20 and 24 will depend on the number of stations over which the bottles have to be distributed. consequently the number of types of bottles which have to sorted. A bottle not identified by the bottle watching station can be considered to be of one type.

From the above it will be clear, that the follow rolls 15 of all pushing members are located in the cam track part 19 at the upstream end of the sorting device 8 and will come to lie in the part 16 via the curved part 21. If now no load on the pushing member is exerted the follow roll 13 of it will come in the obliquely diverging cam track part 20. Becuase of this the bottle 3a of the supply conveyor 1 will be shifted away and carried off via the guide 5a.

To prevent this, if desired, all pushing members 13 are provided with an upwardly protruding tongue 27 as appears from Figs.1 and 2.

As especially appears from Fig. 1 the tongues 27 of eight successive pushing members are mounted in a staggered way. For this reason the pushing members are provided with successive numbers 1 to 8. The tongues 27 of the pushing members nr. 1 consequently are at the same location; the same being the case for the pushing members nr. 2 and so on.

Each tongue 27 of a pushing member 13 cooperates with a strip 28 which is shiftably mounted on one or more bars 29, vide Fig. 2, which are supported by parts 30 of the frame part 12. Consequently there are also eight of these strips 28.

With each strip 28 a lever 31 is coupled, which is pivotably supported in the point 32 and which has a substantially perpendicularly hooked part 33, which is coupled to the piston rod 34 of a pneumatic cylinder 35. Consequently there are also eight pneumatic cylinders 35 of which in Fig. 2 the supports 36 have been numbered with the numerals 1-8 incl. The numerals 1, 3, 5 and 7 are staggered with respect to the numerals 2, 4, 6 and 8, so that sufficient space is present for each cylinder 35' and the parts 31 and 33 connected to the piston rod 34 of it.

Supply of pressurized air to the different cylinders 35 can take place from the central duct 37 to which end to each cylinder 35 an electromagnetic valve 38 is mounted.

As appears from Fig. 1 each strip 28 extends substantially from the beginning of the bent part 21 of the cam track up till a part of the cam track 16. The strip 28 which is lowermost in Fig. 1, cooperates with the tongue 27 of the pushing member 13, which has been referenced with 8. The next strip 28 cooperates with the pushing member 13, referenced 7 and so on.

As already said above the follow rolls 15 of all pushing members 13 will pass along the curved part 21 of the cam track and will arrive in the obliquely diverging part 20 of the cam track. The latter will not be the case if the tongue 27 connected to the pushing member 13 is pushed away to the position as indicated in Fig. 2 by means of the related strip 28 so that the pushing member is displaced in the direction of the arrow R1. To this purpose a signal will be sent to the electromagnetic valve 38 of the pneumatic cylinder 35 by means of the bottle watching station 7, so that the related strip 28 will be moved. The strip 28 occupies a position as indicated in the most left portion of Fig. 2. The strip 28 lying beside it is in an intermediate position and the strip following further on is in the non-active position.

As appears from Fig. 1 for each branch of the straight on running cam track 19 eight strips 28 are present for controlling the successive pushing members 13, the displacement of the strips 28, if any, being controlled by signals delivered by the bottle watching station 7.

When a bottle 3a is removed from the row 4 by means of a plurality of pushing members, the pushing members are somewhat withdrawn but will follow a track in which they are located between successive bottles at the location where the expelled bottle was located. In this way the still present bottles are positively supported, so that they will engage the correct pushing members when they, in their turn, have to be removed from the supply conveyor 1. Therewith it is of course important that the tongues of the pushing members 13 of which the follow rolls 15 follow the cam track 23 do not engage strips 28, but move along them.

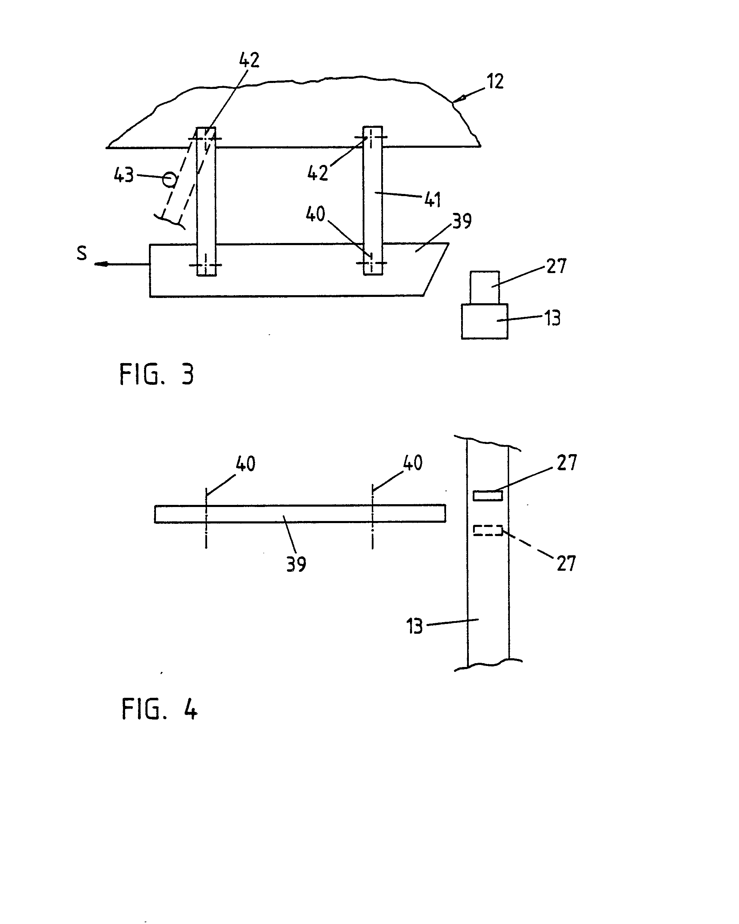

To be sure that a follow roll 15, being located in the broad part 16 of the cam track will follow either the part 19 or the part 20 of the cam track and will not be blocked by a forwardly protruding point of the cam track, at the location where the part 20 branches off from the part 19, a guiding rod 39 is provided for the tongue 27 of each pushing member 13, vide Figs. 3 and 4. The guide rod 39

is pivotally connected in the points 40 to two suspension levers 41 which at their upper ends are pivotally connected to the frame 12 in the points 42. In the correct position of a pushing member 13 its tongue 27 will pass the rod 39 on one of its sides. If, however, the pushing member 13 is in an intermediate position, the tongue 27 will engage the rod 39 and press it toward the left in the direction of the arrow S. By this one lever 41 will engage a switch 43 which will switch off the device.

In about the same way as indicated in Fig. 3 the most forward part 5A, vide Fig. 1, of the guide 5a may be pivotally suspended to levers 44, such that when the part 5a is pressed toward the left, as seen in Fig. 1, a switch 45 is activated by one of the levers 44 by which the device will be switched off.

It is remarked, that if at the location which in Fig. 1 is indicated with reference 6, a bottle should lack, the pushing members 13, being present there, generally will take an outwardly position, as for instance indicated for the bottle indicated with 3a. The bottles which are located immediately at both sides of the location 6 are then positively supported by the related pushing members 13.

It will be clear that only a possible embodiment has been described and is shown in the drawing and that many modifications can be applied without leaving the inventive idea.


## Claims

1. Device for selectively distributing objects, especially bottles, supplied in a row (4) by means of a supply conveyor (1), over a plurality of output conveyors (2) located besides the supply conveyor (1) for feeding predetermined bottles (3a,3b,3c) to predetermined treatment stations, said device comprising a sorting conveyor (9) mounted beside said endless supply conveyor (1) opposite the side where the output conveyors (2) are located, said sorting conveyor (9) being coupled to the supply conveyor (1) and being provided with juxtapositioned pushing members (13) which are movable in a direction perpendicular to the direction of movement of the sorting conveyor (9), such that they can be brought into contact with the bottles (3) standing on the supply conveyor (1), each pushing member (13) being provided with a follower (15) cooperating with stationary cam tracks (16,19-26) of which the first one (19) substantially extends in the direction of the sorting conveyor (9) and at least one other track (20,24) obliquely diverges from said first cam track (19) in the direction of the supply conveyor (1) to return, after attaining the most remote point, back to the first cam track (19), controlling means (27-38) being present to bring the follower (15) of a pushing member (13) in a predetermined cam track (16,19-26) in dependence on a signal delivered by a bottle watching station (7) positioned near the supply conveyor (1) in upstream direction of this, characterized in that at some distance upstream the point where the oblique cam track (20,24) is branched off from the first cam track (19), this first cam track (19) is provided with a curved portion (21,25) by which the pushing members (13) are moved over some distance in the direction towards the supply conveyor (1), such that the pushing members (13) automatically will follow the cam track (21,24) diverging from the first cam track in case the bottle watching station (7) does not deliver a signal to control the pushing member (13).

2. Device according to claim 1 or 2, characterized in that the pushing members are having such a width that each bottle will be in contact with at least two of these members, each pushing member (13) being provided with an upwardly extending tongue (27), the tongues (27) of a certain number of adjacent pushing members (13) being staggered with respect to each other, the control means comprising an equal number of strips (28) shiftably mounted to at least one bar (29) which is stationary mounted in a direction transverse to the direction of movement of the conveyor (9), each strip (28) extending over said number of pushing members (13).

3. Device according to claim 2, characterized in that each strip (28) extends over at least the distance travelled by each pushing member (13) between the beginning and the end of the curved portion (21,25) of the first cam track (19).

4. Device according to claim 2 or 3, characterized in that each strip (28) is moved by means of a pivotably mounted lever (31) actuated by a pneumatic cylinder (35), the supply of pressurized air to the cylinder being controlled by a signal delivered by the bottle watching station (7).

5. Device according to claim 4, characterized in that by the signal delivered by the bottle watching station (7) a valve (38) is controlled which during a predetermined time period causes pressurized air to be supplied to the concerned pneumatic cylinder (35).

6. Device according to one of the claims 2-5, characterized in that the tongue (27) of each pushing member (13), immediately after said pushing member (13) has past the curved portion (21,25) of the first cam track (19), will be positioned besides a checking bar (29) being pivotably suspended in such a way that a tongue (27) of a pushing member (13) not being in one of both final positions, will engage the checking bar (39) and will displace this, by which displacement a switch (43) will be actuated for switching off the device.

7. Device according to one of the preceding claims,
characterized in
that it comprises a stationary guide (5a,5b) being mounted above the output conveyors (2) and obliquely diverging from the supply conveyor (1) to bring a bottle being pushed away from the supply conveyor (1) by the pushing members (13) on the desired output conveyor, the most forward portion (5a) of the stationary guide (5a,5b) being pivotably mounted such that when on this portion (5a) a load is exerted trespassing a predetermined value, this portion will be displaced, by which displacement a switch (45) will be actuated for switching off the device.

FIG. 1

FIG. 2

FIG. 3

FIG. 4

SPECIAAL MACHINEFABRIEK J.H. VAN UITERT B.V., DONGEN, The Neth.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | DE-A-2 941 576 (VETTER)<br>* Figures 1-7; page 14, line 22 - page 15, line 31; page 12, line 1 - page 13, line 12; page 16, lines 28-34; page 18, lines 9-12 *<br>--- | 1 | B 07 C 5/36 |
| D,A | US-A-3 791 518 (VANDERHOOF)<br>* Figures 1-6; column 3, line 19 - column 4, line 8 *<br>----- | 1 | |

TECHNICAL FIELDS SEARCHED (Int. Cl.4)

B 07 C
B 65 G

The present search report has been drawn up for all claims

| Place of search | Date of completion of the search | Examiner |
|---|---|---|
| THE HAGUE | 24-04-1989 | GYSEN L.A.D. |

EPO FORM 1503 03.82 (P0401)